(19) Europäisches Patentamt
European Patent Office
Office européen des brevets

(11) **EP 4 700 508 A1**

(12) **EUROPÄISCHE PATENTANMELDUNG**

(43) Veröffentlichungstag:
**25.02.2026   Patentblatt 2026/09**

(21) Anmeldenummer: **24195653.1**

(22) Anmeldetag: **21.08.2024**

(51) Internationale Patentklassifikation (IPC):
**G05B 19/404** (2006.01)    **G05B 19/416** (2006.01)

(52) Gemeinsame Patentklassifikation (CPC):
**G05B 19/19; G05B 19/182; G05B 19/404;**
**G05B 19/416;** G05B 2219/50008;
G05B 2219/50216; G05B 2219/50218;
G05B 2219/50234

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Alkafafi, Loay**
**91052 Erlangen (DE)**
• **Andreo, Gaelle**
**91056 Erlangen (DE)**
• **Bock, Marco**
**91056 Erlangen (DE)**
• **Liebst, Moritz**
**75428 Illingen (DE)**
• **Pitz, Thomas**
**71277 Rutesheim (DE)**
• **Rack, Philip Joachim**
**70197 Stuttgart, S-West (DE)**
• **Schermann, Aleksandra**
**71229 Leinfelden-Echterdingen (DE)**
• **Schmiegelt, Benjamin**
**70825 Korntal-Münchingen (DE)**
• **Spielmann, Ralf**
**70569 Stuttgart (DE)**

(74) Vertreter: **Siemens Patent Attorneys**
**Postfach 22 16 34**
**80506 München (DE)**

(54) **KANALSYNCHRONISATION BEI MEHRSPINDEL-WERKZEUGMASCHINEN**

(57)     Die Erfindung betrifft ein Verfahren zur rechnergestützten numerischen Steuerung einer Mehrspindel-Werkzeugmaschine (1), welche eine mit einem ersten Werkzeug (3A) bestückte erste Werkzeugspindel (2A) und eine von der ersten Werkzeugspindel (2A) unabhängig steuerbare und mit einem zweiten Werkzeug (3B) bestückte zweite Werkzeugspindel (2B) aufweist, wobei
- ein erstes Werkstück (5A) mittels des ersten Werkzeugs (3A) bearbeitet wird, indem ein vorgegebenes Teileprogramm in einem ersten Bearbeitungskanal abgearbeitet wird, und ein zweites Werkstück (5B) mittels des zweiten Werkzeugs (3B) bearbeitet wird, indem das Teileprogramm in einem zweiten Bearbeitungskanal synchronisiert mit dem ersten Bearbeitungskanal abgearbeitet wird;
- die Abarbeitung des Teileprogramms in dem ersten Bearbeitungskanal eine Ansteuerung erster Maschinenachsen (X1, Y1, Z1) zur Führung der ersten Werkzeugspindel (2A) gemäß einer ersten Werkzeugbahn (TA) beinhaltet und die Abarbeitung des Teileprogramms in dem zweiten Bearbeitungskanal eine Ansteuerung zweiter Maschinenachsen (X2, Y2, Z2) zur Führung der zweiten Werkzeugspindel (2B) gemäß einer zweiten Werkzeugbahn (TB) beinhaltet, wobei ein Bearbeitungsergebnis des ersten Werkstücks (5A) an einem Ende der ersten Werkzeugbahn (TA) gleich einem Bearbeitungsergebnis des zweiten Werkstücks (5B) an einem Ende der zweiten Werkzeugbahn (TB) ist.

Zum Synchronisieren der von der ersten Werkzeugspindel (2A) und der von der zweiten Werkzeugspindel (2B) ausgeführten Bewegungen sieht die Erfindung vor, dass in jedem Bearbeitungskanal wenigstens eine erste von einem Bearbeitungsfortschritt abhängige skalare Größe (BA, BB) erfasst wird und die ersten Maschinenachsen (X1, Y1, Z1) und die zweiten Maschinenachsen (X2, Y2, Z2) derart angesteuert werden, dass eine Differenz ($\Delta B$) der in dem ersten Bearbeitungskanal erfassten skalaren Größe (BA) und der in dem zweiten Bearbeitungskanal erfassten skalaren Größe (BB) reduziert wird.

EP 4 700 508 A1

FIG 1

**Beschreibung**

Die vorliegende Erfindung betrifft ein Verfahren zur rechnergestützten numerischen Steuerung einer Mehrspindel-Werkzeugmaschine, welche eine mit einem ersten Werkzeug bestückte erste Werkzeugspindel und eine von der ersten Werkzeugspindel unabhängig steuerbare und mit einem zweiten Werkzeug bestückte zweite Werkzeugspindel aufweist. Die Erfindung betrifft ferner eine Steuereinrichtung zur numerischen Steuerung einer Mehrspindel-Werkzeugmaschine. Die Erfindung betrifft weiterhin ein Werkzeugmaschinensystem mit einer Mehrspindel-Werkzeugmaschine, aufweisend eine mit einem ersten Werkzeug bestückbare erste Werkzeugspindel und eine von der ersten Werkzeugspindel unabhängig steuerbare und mit einem zweiten Werkzeug bestückbare zweite Werkzeugspindel. Zudem betrifft die Erfindung ein Computerprogramm und ein computerlesbares Speichermedium.

Im Bereich der Werkzeugmaschinen werden einige Maschinen als Mehrspindel-Werkzeugmaschinen, auch als Mehrspindler bezeichnet, ausgeführt. Diese weisen zwei oder mehr Werkzeugspindeln zur entsprechenden Bearbeitung von zwei oder mehr Werkstücken auf. Dadurch müssen zwei oder mehr Bearbeitungen und damit die Bewegungsführung und Spindelsteuerung zeitgleich, also synchron zueinander, erfolgen. Die Anwendung von mehreren synchronen Bearbeitungseinheiten auf einer Maschine lässt sich auf verschiedenste Technologien anwenden, zum Beispiel zum Fräsen, Drehen, Schleifen, und so weiter. Mehrspindel-Werkzeugmaschinen mit genau zwei Werkzeugspindeln werden auch als Doppelspindel-Werkzeugmaschinen oder Doppelspindler bezeichnet.

Doppelspindler können zum Beispiel zwei Werkstücke gleichzeitig mit zwei Werkzeugen bearbeitet, so dass am Ende der Bearbeitung zwei nominell identische Werkstücke vorliegen. Die Bearbeitung der beiden Werkstücke erfolgt synchron. Damit ist die Ausbringung auf einem Doppelspindler im Vergleich zu einer einspindligen Werkezugmaschine doppelt so hoch. Ein Doppelspindler kann jedoch auch betrieben werden, nur ein Werkstück zu fertigen, die zweite Spindel ist dann nicht aktiv.

Bei Doppelspindlern gibt es verschiedene Konzepte, deren Komplexität beispielsweise auf die jeweiligen Produktions- und Genauigkeitsanforderungen zugeschnitten werden kann. Die Konzepte unterscheiden sich konstruktiv beispielsweise in den Freiheitsgraden der einzelnen Werkzeugspindeln beziehungsweise Bearbeitungseinheiten.

In einfachen Doppelspindlern werden die beiden Werkzeugspindeln mechanisch starr miteinander verbunden. Der Spindelverbund wird dann durch die gemeinsamen Achsen, zum Beispiel X-, Y- und Z-Achse, bewegt. Dieses einfache Konzept kann daher konstruktiv begründet nur einen Werkzeugverschleiß berücksichtigen. Es müssen idealerweise identische Werkzeuge bzw. Werkzeuge mit identischem Verschleiß verwendet werden, um bei der Fertigung identische Werkstücke zu erzeugen.

Ein komplexeres Konzept sieht für die beiden Werkzeugspindeln jeweils eigenständige Z-Achsen vor. Dadurch können die Werkzeugspindeln in der Z-Richtung unterschiedlich positioniert werden. Ein noch etwas komplexeres Konzept ermöglicht es durch die Verwendung von Ausgleichsachsen, die redundant auf den Hauptachsen aufgebaut sind, die Werkzeugspindeln und damit die Werkzeuge in alle drei Achsrichtungen zu bewegen, jedoch nur für vergleichsweise kurze Verfahrbereiche. Diese Art der Doppelspindler ist zumindest in der Lage, im Vergleich zu vorherigen beschriebenen Konzepten, mit vollständig unterschiedlichen Werkzeugkorrekturen und ggf. auch Werkstückspannsituationen zurecht zu kommen.

Eine besonders hohe Genauigkeit kann durch sogenannte echte Mehrspindel-Werkzeugmaschinen erreicht werden, also Mehrspindel-Werkzeugmaschinen mit zwei oder mehr eigenständigen, also unabhängig voneinander steuerbaren und damit bewegbaren Werkzeugspindeln. Die beiden Werkzeugspindeln eines Doppelspindlers sind dann beispielsweise jeweils mit einer eigenen X-, Y- und Z-Achse ausgestattet. Je nach Ausführungsform und Technologie können stattdessen oder zusätzliche weitere lineare Achsen und/oder Rotationsachsen (auch als Rundachsen bezeichnet) bei der betreffenden Mehrspindel-Werkzeugmaschine vorgesehen sein. Diese können jeweils für alle Werkzeugspindeln unabhängig sein oder bezüglich den Werkzeugspindeln die gleiche (Relativ-) Bewegung bewirken.

Die Werkzeugspindeln werden dann beispielsweise über ein und dieselbe CNC-Steuerung bedient und gesteuert, zum Beispiel über jeweils einen eigenen Bearbeitungskanal, nachfolgend auch kurz als "Kanal" bezeichnet, für jede Werkzeugspindel. Die einzelnen Achsen der Werkzeugspindeln können teilweise dieselbe Führungsschiene nutzen.

Ein Vorteil echter Mehrspindel-Werkzeugmaschinen besteht darin, dass die verschiedenen Werkzeugspindeln zur Fertigung nominell identischer Werkstücke mit Werkzeugen bestückt werden können, die zwar nominell ebenfalls identisch sind, deren Abmessungen sich aber beispielsweise aufgrund unterschiedlichem Verschleiß voneinander unterscheiden. Die unabhängige Steuerung der verschiedenen Werkzeugspindeln kann die unterschiedlichen Abmessungen kompensieren.

Für eine optimale Ausnutzung des gemeinsamen Arbeitsraumes beziehungsweise eine kompakte Konstruktion der Werkzeugmaschine ist es erstrebenswert, einen mechanischen Versatz zwischen den beiden Werkzeugspindeln möglichst klein auszulegen, beispielsweise kleiner als 1 m oder auch im Bereich von 500 mm liegen. Um derart kleine Abstände mechanisch realisieren zu können, müssten die beweglichen Ständer, an denen die Werkzeugspindeln montiert sind, oder sonstige bewegliche Komponenten, jedoch nur einen sehr geringen Abstand zueinander haben, beispielsweise wenige Millimeter. Es bestünde daher potenzielle Kollisionsgefahr. Diese bestünde vor allem, wenn die Werkzeugspindeln, wie oben erläutert, zur Kompensation unterschiedlicher Werkzeugabmessungen unterschiedlich angesteuert würden.

Es gibt neben den bereits genannten unterschiedlichen Werkzeugabmessungen eine Vielzahl weiterer Gründe, die dazu führen, dass sich die Werkzeugspindeln während der parallelen Werkstückbearbeitung nicht synchron bewegen. Dazu zählen insbesondere:

- Abweichungen betreffend die Werkzeugspindeln, etwa Nullpunktverschiebungen, unterschiedliche dynamisch Beschränkungen, mechanische Toleranzen oder unterschiedliche Ausgestaltungen der Spindeln.
- Die Teileprogramme in den Kanälen sind unterschiedlich.
- Dasselbe Werkstück wird in den Kanälen mit unterschiedlichen Frames bearbeitet, weil z.B. der Werkstückrohling unterschiedlich aufgespannt ist.
  Durch eine unterschiedliche Frame-Drehung derselben Geometrie des Werkstücks ergeben sich unterschiedliche Dynamikpotentiale (Geschwindigkeit, Beschleunigung, Ruck) der Bahnbewegung. Bei demselben Teileprogramm in den Kanälen ergeben sich für dieselben Sätze unterschiedliche Dynamikpotenzial für die Bahnbewegung. (Bsp.: Im einen Kanal wird ein bestimmter Linearsatz nur mit der X-Achse durchgeführt, im anderen Kanal ist daran auch die Y-Achse beteiligt, da der Frame gedreht ist. Der zweite Kanal hat also auf der Bahn mehr Dynamik) Bei einer Abarbeitung ohne Synchronisation laufen die Bearbeitungen der Kanäle auseinander.
- Unterschiedliche Maschinen Geometrien in den Kanälen.
  Z.B. können die Offsets in der kinematischen Kette für kinematische Transformationen unterschiedlich sein.
- Unterschiedliche Achsdynamiken (Geschwindigkeit, Beschleunigung, Ruck) in den Kanälen.

Durch asynchrone Bewegungsabläufe der betreffenden Maschinen-Teile bzw. Spindeln erhöht sich die Kollisionsgefahr.

Es ist eine Aufgabe der vorliegenden Erfindung, bei der Steuerung von Mehrspindel-Werkzeugmaschinen der eingangs genannten Art das Kollisionsrisiko zu reduzieren.

Diese Aufgabe wird durch ein Verfahren mit den Verfahrensschritten gemäß Patentanspruch 1 gelöst, also ein Verfahren zur rechnergestützten numerischen Steuerung einer Mehrspindel-Werkzeugmaschine, welche eine mit einem ersten Werkzeug bestückte erste Werkzeugspindel und eine von der ersten Werkzeugspindel unabhängig steuerbare und mit einem zweiten Werkzeug bestückte zweite Werkzeugspindel aufweist, wobei

- ein erstes Werkstückmittels des ersten Werkzeugs bearbeitet wird, indem ein vorgegebenes Teileprogramm in einem ersten Bearbeitungskanal abgearbeitet wird, und ein zweites Werkstück mittels des zweiten Werkzeugs bearbeitet wird, indem das Teileprogramm in einem zweiten Bearbeitungskanal synchronisiert mit dem ersten Bearbeitungskanal abgearbeitet wird;
- die Abarbeitung des Teileprogramms in dem ersten Bearbeitungskanal eine Ansteuerung erster Maschinenachsen zur Führung der ersten Werkzeugspindel gemäß einer ersten Werkzeugbahn beinhaltet und die Abarbeitung des Teileprogramms in dem zweiten Bearbeitungskanal eine Ansteuerung zweiter Maschinenachsen zur Führung der zweiten Werkzeugspindel gemäß einer zweiten Werkzeugbahn beinhaltet, wobei ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist; und
- in jedem Bearbeitungskanal wenigstens eine von einem Bearbeitungsfortschritt abhängige skalare Größe erfasst wird und die ersten Maschinenachsen und die zweiten Maschinenachsen derart angesteuert werden, dass eine Differenz der in dem ersten Bearbeitungskanal erfassten skalaren Größe und der in dem zweiten Bearbeitungskanal erfassten skalaren Größe reduziert wird.

Ferner wird die Aufgabe gelöst durch eine Steuereinrichtung nach Anspruch 8 zur Durchführung eines derartigen Verfahrens.

Vorteilhafte Weiterbildungen und bevorzugte Ausführungsformen sind Gegenstand der abhängigen Ansprüche.

Die Erfindung beruht auf dem Gedanken, dasselbe Teileprogramm in zwei Bearbeitungskanälen synchronisiert abzuarbeiten, um ein erstes Werkstück mittels eines ersten Werkzeugs, mit dem eine erste Werkzeugspindel bestückt ist, und ein zweites Werkstück mittels eines zweiten Werkzeugs, mit dem eine zweite Werkzeugspindel bestückt ist, zu bearbeiten. Aus den eingangs bereits genannten Gründen können sich bei herkömmlichen Mehrspindel-Werkzeugmaschinen die Spindeln trotz identischem Teileprogramm unterschiedlich (asynchron) bewegen. Durch die Erfindung erfolgt eine Art "Zwangssynchronisierung" der Spindeln.

Gemäß einem Aspekt der Erfindung wird ein Verfahren zur rechnergestützten numerischen Steuerung (CNC-Steuerung - englisch: Computerized Numerical Control) einer Mehrspindel-Werkzeugmaschine angegeben. Die Mehrspindel-Werkzeugmaschine weist eine mit einem ersten Werkzeug bestückte erste Werkzeugspindel auf und eine mit einem zweiten Werkzeug bestückte zweite Werkzeugspindel. Die zweite Werkzeugspindel ist dabei unabhängig von der ersten Werkzeugspindel steuerbar.

Ein erstes Werkstück wird mittels des ersten Werkzeugs bearbeitet, indem ein vorgegebenes Teileprogramm in einem ersten Bearbeitungskanal der Steuereinrichtung abgearbeitet wird. Ein zweites Werkstück wird mittels des zweiten Werkzeugs bearbeitet, indem das Teileprogramm in einem zweiten Bearbeitungskanal synchronisiert mit dem ersten Bearbeitungskanal abgearbeitet wird. Die Abarbeitung des Teileprogramms in dem ersten Bearbeitungskanal bewirkt eine Ansteuerung erster Maschinenachsen der Mehrspindel-Werkzeugmaschine zur Führung der ersten Werkzeugspindel gemäß einer ersten Werkzeugbahn. Die Abarbeitung des Teileprogramms in dem zweiten Bearbeitungskanal bewirkt eine Ansteuerung zweiter Maschinenachsen der Mehrspindel-Werkzeugmaschine zur Führung der zweiten Werkzeugspindel gemäß einer zweiten Werkzeugbahn.

Durch die Abarbeitung des Teileprogramms in dem ersten Bearbeitungskanal und dem zweiten Bearbeitungskanal wird die erste Werkzeugspindel also gemäß der ersten Werkzeugbahn geführt und die zweite Werkzeugspindel wird gemäß der zweiten Werkzeugbahn geführt.

Dabei ist ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn. In den Bearbeitungskanälen der numerischen Steuerung wird jeweils dieselbe von einem Bearbeitungsfortschritt abhängige skalare Größe erfasst wird und die ersten Maschinenachsen und die zweiten Maschinenachsen werden derart angesteuert, dass eine Differenz der in dem ersten Bearbeitungskanal erfassten skalaren Größe und der in dem zweiten Bearbeitungskanal erfassten skalaren Größe reduziert wird.

Die erste Werkzeugspindel kann durch entsprechende Ansteuerung und Bewegung der ersten Maschinenachsen geführt werden und die zweite Werkzeugspindel durch eine entsprechende Ansteuerung und Bewegung der zweiten Maschinenachsen. Die ersten Maschinenachsen beziehungsweise die zweiten Maschinenachsen können jeweils eine oder mehrere lineare oder translatorische Achsen beinhalten, beispielsweise eine X-, eine Y- und eine Z-Achse. Alternativ oder zusätzlich können die ersten Maschinenachsen beziehungsweise die zweiten Maschinenachsen jeweilige Rotationsachsen beinhalten, beispielsweise eine A- und/oder eine B-Achse.

Die Werkzeugspindeln sind unabhängig voneinander steuerbar. Dies kann insbesondere derart verstanden werden, dass die ersten Maschinenachsen unabhängig von den zweiten Maschinenachsen gesteuert und bewegt werden können. Somit ist es prinzipiell möglich, mittels der ersten Werkzeugspindel und der zweiten Werkzeugspindel voneinander unterschiedliche Teileprogramme abzuarbeiten.

Dass das Teileprogramm in dem ersten und dem zweiten Bearbeitungskanal synchronisiert abgearbeitet wird, kann insbesondere derart aufgefasst werden, dass die Abarbeitung zeitgleich beziehungsweise parallel erfolgt und dementsprechend auch die Ansteuerung der ersten Maschinenachsen synchronisiert mit der Ansteuerung der zweiten Maschinenachsen erfolgt, so dass auch die Bewegung der ersten Werkzeugspindel synchronisiert (synchron) mit der Bewegung der zweiten Werkzeugspindel erfolgt.

Insbesondere wird durch die Steuerung der Bewegungen der Spindeln die Differenz während der Bearbeitung stets so eingestellt, dass sie einen vorgegebenen oder vorgebbaren Grenzwert nicht übersteigt. Dies kann insbesondere mittels einer entsprechenden Regelung erfolgen, wie nachfolgend noch genauer ausgeführt wird.

Bei der skalaren Größe handelt es sich insbesondere um eine sich während der Werkstückbearbeitung kontinuierlich verändernde Größe.

Weiterhin handelt es sich bei der skalaren Größe insbesondere um eine geometrische Größe.

Im Prinzip kann jede sich während der Bearbeitung proportional zu dem Bearbeitungsfortschritt ändernde Größe zur Synchronisation der Kanäle herangezogen werden. Bei einer bevorzugten Ausführungsform der Erfindung wird als kontinuierliche, sich während der Bearbeitung ändernde, geometrische skalare Größe die Bogenlänge der durch das Teileprogramm programmierten Bahn in den Kanälen erfasst und deren Differenz reduziert, insbesondere minimiert. Dabei bezeichnet die Bogenlänge die Länge des Weges an der Werkstückoberfläche bzw. der Werkstückkontur, den das Werkzeug ab einem Referenzzeitpunkt, z.B. t0, bis zum jeweiligen Bearbeitungszeitpunkt, z.B. t1, durch das Werkstück-Material zurückgelegt hat. Es handelt sich somit um ein Längenmaß.

Als Beispiel für eine nicht-geometrische skalare Größe könnte das Zerspanvolumen zur Synchronisation der Bewegungsabläufe herangezogen werden.

Damit bei einer CNC-Maschine das Werkzeug der programmierten Kontur folgen kann, ist eine Kompensation des Werkzeugradius erforderlich. Die mittels der numerischen Steuerung ausgeführte Werkzeugradiuskorrektur ermöglicht es der Maschine, den tatsächlichen Werkzeugradius bzw. Schneidenradius des Werkzeugs zu berücksichtigen, um der programmierten Kontur genau zu folgen. Der durch die in einer Interpolation verfahrenen Maschinenachsen bewegte Werkzeugmittelpunkt (auch Tool Center Point oder kurz TCP) bewegt sich daher nicht entlang der programmierten Kontur, sondern um einen Offset davon beabstandet. Unterschiedliche Werkzeugradien, z.B. bedingt durch unterschiedliche Werkzeuge oder unterschiedlichen Verschleiß der Werkzeuge, führen so zu unterschiedlich langen Werkzeugbahnen und damit bei gleichen Vorschubgeschwindigkeiten zu asynchronen Bewegungen bei Mehrspindel-Maschinen.

Die Bogenlänge am Werkstück, also die Länge der Werkstück-Kontur nach dem Abfahren der Werkzeugbahn, ist hingegen unabhängig von dem Werkzeugradius und daher als von dem Bearbeitungsfortschritt abhängige skalare Größe, insbesondere sich während der Bearbeitung kontinuierlich ändernde, geometrische Größe zur Synchronisation der Bewegungen geeignet.

Neben der Bogenlänge der programmierten Kontur existiert eine Vielzahl weiterer skalarer Größen, die ebenfalls - analog zu der Bogenlänge - zur Synchronisation geeignet sind. Als Beispiele dafür werden genannt:

- Die ursprüngliche Bogenlänge der Werkstück-Kontur vor dem Abfahren der Werkzeugbahn. Auch bezüglich dieser Kontur könnte man den Bearbeitungsfortschritt in den beiden Kanälen erfassen und mittels der CNC-Steuerung eine Abweichung zwischen den Kanälen begrenzen bzw. reduzieren bzw. minimieren.
- Die Bogenläng einer beliebigen "Offset-Bahn", also einer Bahn mit einem bestimmten Offset (Abstand) gegenüber der programmierten Bahn bzw. der ursprünglichen Werkstück-Kontur vor dem Abfahren der Werkzeugbahn.
- Die Bahnlänge normiert mit der programmierten Geschwindigkeit pro Satz: (Länge / programmierte Geschwindigkeit).
- Die Bogenlänge kombiniert mit der Krümmung der Bahnkurve: Bei hoher Krümmung soll z.B. die kontinuierliche Größe stärker gestreckt sein. Damit wird implizit schon in gewisser Form die Dynamik der Bewegung berücksichtigt. Die Bogenlänge ist ein Integral über der 2-Norm der Ableitung der Kurve. Die zusätzliche Berücksichtigung der Krümmung kann mathematisch z.B. durch einen zusätzlichen additiven Term "Krümmung" im Integral berücksichtigt werden.
- Ein normierter Bahnparameter bezogen auf die Satznummer im Teileprogramm. Dieser ist insbesondere dann sinnvoll, wenn in beiden Kanälen die Teileprogramme (und damit der Bogenlängenverlauf) nicht vollständig identisch sind. Alternativ zu der Satznummer als Bezug könnte man auch auf die Bogenlänge eines der Kanäle normieren.
- Für den Spezialfall "Interpolationsdrehen": ein Werkzeugwinkel, kombiniert mit der Bogenlänge. Der Regler muss dabei auch auf die Spindelbewegung wirken.

Auch skalare Größen, die z.B. auf Kombinationen aus den genannten Beispielen beruhen, kommen in Betracht.

Je nach Technologie der Mehrspindel-Werkzeugmaschine, ob es also sich beispielsweise um eine Werkzeugmaschine zum Fräsen, Drehen, Schleifen oder Bohren und so weiter handelt, kommen unterschiedliche erste Werkzeuge beziehungsweise zweite Werkzeuge zum Einsatz. Dementsprechend kann sich auch die Art der Werkzeugabmessungen je nach Technologie unterscheiden. Insbesondere sind das erste und das zweite Werkzeug durch jeweilige Soll-Maße, gegebenenfalls inklusive entsprechender Toleranzbereiche, für eines oder mehrere Maße, beispielsweise Längenmaße oder Radien und so weiter, definiert.

Die unterschiedlichen Werkzeugabmessungen, insbesondere Werkzeugradien, der in den Spindeln eingespannten Werkzeuge können daraus resultieren, dass in den Spindeln unterschiedliche Werkzeuge verwendet werden. Bei baugleichen Werkzeugen können die Unterschiede insbesondere dadurch bedingt sein, dass sich die Werkzeuge im Rahmen einer zulässigen Toleranz unterscheiden oder dass die Werkzeuge unterschiedlich verschlissen sind. Sowohl die Werkzeugabmessungen an sich als auch der Verschleißgrad und dadurch bedingte Abweichungen von den Soll-Abmessungen können in der numerischen Steuerung erfasst und bei der Abarbeitung des Teileprogramms berücksichtigt werden.

Die ersten und die zweiten Werkzeugabmessungen können vor der Durchführung des erfindungsgemäßen Verfahrens durch konventionelle Messungen, beispielsweise manuelle oder automatische Messungen, ermittelt und der Steuereinrichtung bereitgestellt werden. Es ist auch möglich, dass in manchen Ausführungsformen des erfindungsgemäßen Verfahrens die ersten und/oder die zweiten Werkzeugabmessungen in einem Verfahrensschritt des erfindungsgemäßen Verfahrens bestimmt werden, insbesondere automatisch, beispielsweise mittels der Mehrspindel-Werkzeugmaschine selbst.

Dass sich die ersten Werkzeugabmessungen von den zweiten Werkzeugabmessungen unterscheiden, kann insbesondere derart verstanden werden, dass die ersten Werkzeugabmessungen einen oder mehrere erste Ist-Werte für das erste Werkzeug beinhalten und die zweiten Werkzeugabmessungen einen oder mehrere Ist-Werte für das zweite Werkzeug, wobei sich mindestens einer der ersten Ist-Werte von einem entsprechenden der zweiten Ist-Werte unterscheidet. Die Werkzeuge unterscheiden sich insbesondere in den Ist-Werten der Werkzeugradien.

Durch die unterschiedlichen Werkzeugradien ergeben sich bei und derselben durch das Teileprogramm festgelegten Kontur unterschiedliche Bahnverläufe der Werkzeuge, bezogen auf deren TCP.

Mittels der in jedem Kanal erfassten, vom Bearbeitungsfortschritt abhängigen skalaren Größe, insbesondere der Bogenlänge, können die verschiedenen Kanäle in jedem Zeitpunkt der Bearbeitung oder an jeder Stelle der Bearbeitung verglichen werden.

Die skalare Größe wird im Folgenden allgemein $r_i(t)$ genannt (i: Kanalnummer, t: Zeitpunkt).

Vorteilhaft kann die Bahninterpolation wenigstens eines Kanals so beeinflusst werden, dass der Unterschied der skalaren Größe zwischen den Kanälen verkleinert wird.

Beispielsweise kann hierfür zunächst der Kanal "iLast" bestimmt werden, der Letzter im Sinne des Voranschreitens (in Bezug auf $r_i(t)$) der Bearbeitung ist, mit:

$$iLast = iLast(t) = argmin_i ( r_i(t) )$$

Jeder andere Kanal k hat zu Kanal iLast eine Differenz in Bezug auf die kontinuierliche Größe:

$$\Delta r_{iLast\_k}(t) := r_{iLast}(t) - r_k(t)$$

Dabei steht $\Delta r_{iLast\_k}(t)$ für den Unterschied der betrachteten skalaren, kontinuierlichen Größe zwischen den Kanälen iLast und k.

Bei der simultanen Bearbeitung von Werkstücken mit unterschiedlichen Werkzeugradien in den Kanälen würde $\Delta r_{iLast\_k}(t)$ mit voranschreitender Zeit tendenziell immer größer werden. Mit der Erfindung wird das verhindert. Jeder Kanal k (außer iLast) kann dabei abhängig von $\Delta r_{iLast\_k}(t)$ sein Voranschreiten in der Bahninterpolation modifizieren mit dem Ziel, das $\Delta r_{iLast\_k}(t)$ zu verringern.

Eine mögliche Realisierung sieht vor, dass für jeden Kanal k die Differenz $\Delta r_{iLast\_k}(t)$ der Eingang eines Reglers ist, z.B. eines PI-Reglers. Der Ausgang ist die Zielgeschwindigkeit der Bahninterpolation (Vorschubgeschwindigkeit) des Kanals k. Sie wirkt wie der Vorschub-Override und die Bahninterpolation modifiziert wie gewünscht die Bahngeschwindigkeit und damit das Voranschreiten der Bearbeitung des Kanals k.

Analog zu einem PI-Lageregler wird dadurch $|\Delta r_{iLast\_k}(t)|$ bei passender Parametrisierung asymptotisch verkleinert.

Vorteilhaft ist der Regler von der Steuereinrichtung umfasst.

Unter der Zielgeschwindigkeit einer Bahninterpolation im Kontext der Bahngenerierung mittels einer CNC-Steuerung wird dabei die Geschwindigkeit verstanden, mit der die Werkzeugspitze entlang der programmierten Bahn bewegt wird. Diese Geschwindigkeit ist entscheidend für die Präzision und Qualität der Bearbeitung, da sie die Zeit bestimmt, die das Werkzeug benötigt, um von einem Punkt zum nächsten zu gelangen.

Bei der Bahninterpolation berechnet die CNC-Steuerung die erforderlichen Bewegungen der Maschinenachsen, um eine fließende und kontinuierliche Bewegung des Werkzeugs entlang der vorgegebenen Bahn zu gewährleisten. Die Zielgeschwindigkeit ist dabei ein wichtiger Parameter, der in das CNC-Programm eingegeben wird, um die gewünschte Bearbeitungsgeschwindigkeit zu erreichen. Sie kann je nach Material, Werkzeugtyp und gewünschter Oberflächengüte variieren, bleibt jedoch bei herkömmlichen CNC-Steuerungen für eine bestimmte Bearbeitung konstant. Übliche CNC-Steuerungen verfügen über einen Override-Steller, mit dem die programmierte Vorschubgeschwindigkeit manuell durch den Benutzer verändert werden kann.

Die CNC-Steuerung nutzt verschiedene Interpolationsarten, um die Bahn zu generieren, wie z.B. Linear-, Kreis-, oder Splineinterpolation. Für jede dieser Interpolationsarten gibt es spezifische G-Codes, die in das CNC-Programm eingefügt werden, um die entsprechende Bewegung auszuführen. Beispielsweise steht G01 für eine Linearinterpolation in Bearbeitungsgeschwindigkeit, während G02 und G03 für Kreisinterpolationen im bzw. gegen den Uhrzeigersinn verwendet werden.

Vorteilhaft können bei der erfindungsgemäßen Steuereinrichtung zusätzlich zu der Zielgeschwindigkeit der Bahninterpolation auch die Bahnbeschleunigung und der Bahnruck der Bahninterpolation mittels des Reglers angepasst werden. Damit reagiert die Bahninterpolation schneller und $|\Delta r_{iLast\_k}(t)|$ verkleinert sich schneller.

Eine vorteilhafte Weiterbildung der Erfindung sieht einen vorausschauenden Mechanismus in der Bahninterpolation vor. Wie zuvor wird auch hier zunächst der Kanal iLast bestimmt. Für die anderen Kanäle k wird nun ein Geschwindigkeitsprofil über mehrere Interpolationstakte (Takte) der numerischen Steuerung vorausschauend berechnet, mit dem Ziel, $|\Delta r_{iLast\_k}|$ möglichst schnell zu reduzieren. Das für den jeweiligen Kanal erzeugte Profil wird dann in den nachfolgenden Takten von der Bahninterpolation ausgegeben und damit von der Maschine abgefahren.

Eine vorausschauende Bahninterpolation und die Erzeugung eines Geschwindigkeitsprofils für ein Werkzeug sind dem Fachmann auf dem Gebiet numerischer Steuerungen an sich bekannt.

Bei einer bevorzugten Ausführungsform dieser Variante wird das Profil in jedem Takt aktualisiert. Damit reagiert die Steuerung zum Beispiel auf Echtzeiteinflüsse, z.B. Änderungen des Override-Stellers. Außerdem trägt es der Tatsache Rechnung, dass die Vorausschau nur eine begrenzte Zahl von Interpolationstakten in die Zukunft geht.

Das Geschwindigkeitsprofil kann vorteilhaft beispielsweise mit einer Optimierung mit Nebenbedingungen realisiert werden. Das Optimierungskriterium ist dabei die Zeitdauer bis $|\Delta r_{iLast\_k}|$ verschwindet. Die Nebenbedingungen sind die Begrenzungen für Bahngeschwindigkeit, Bahnbeschleunigung und Bahnruck.

Gemäß einem weiteren Aspekt der Erfindung wird eine Steuereinrichtung, insbesondere eine CNC-Steuerung für eine Mehrspindel-Werkzeugmaschine angegeben. Dabei weist die Mehrspindel-Werkzeugmaschine wenigstens eine mit einem ersten Werkzeug bestückbare oder bestückte erste Werkzeugspindel und eine von der ersten Werkzeugspindel unabhängig steuerbare und mit einem zweiten Werkzeug bestückbare oder bestückte zweite Werkzeugspindel auf. Die Steuereinrichtung ist zur (CNC-) Steuerung der ersten Werkzeugspindel und der zweiten Werkzeugspindel eingerichtet.

Die Steuereinrichtung ist dazu eingerichtet, zum Bearbeiten des ersten Werkstücks mittels des ersten Werkzeugs ein vorgegebenes Teileprogramm in einem ersten Bearbeitungskanal abzuarbeiten und zum Bearbeiten des zweiten Werkstücks mittels des zweiten Werkzeugs das Teileprogramm in einem zweiten Bearbeitungskanal synchronisiert mit dem ersten Bearbeitungskanal abzuarbeiten. Die Steuereinrichtung ist dazu eingerichtet, zur Abarbeitung des Teileprogramms in dem ersten Bearbeitungskanal erste Maschinenachsen zur Führung der ersten Werkzeugspindel gemäß einer ersten Werkzeugbahn anzusteuern und zur Abarbeitung des Teileprogramms in dem zweiten Bearbeitungskanal zweite Maschinenachsen zur Führung der zweiten Werkzeugspindel gemäß einer zweiten Werkzeugbahn anzusteuern, wobei ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist. Die Steuereinrichtung ist dazu eingerichtet, dass in jedem Bearbeitungskanal wenigstens eine erste von einem Bearbeitungsfortschritt abhängige skalare Größe erfasst wird und die ersten Maschinenachsen und die zweiten Maschinenachsen derart angesteuert werden, dass eine Differenz der in dem ersten Bearbeitungskanal erfassten skalaren Größe und der in dem zweiten Bearbeitungskanal erfassten skalaren Größe reduziert wird.

Die Steuereinheit beinhaltet insbesondere eine oder mehrere Recheneinheiten. Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "readonly memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Weitere Ausführungsformen der erfindungsgemäßen Mehrspindel-Werkzeugmaschine folgen unmittelbar aus den verschiedenen Ausgestaltungen des erfindungsgemäßen Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf entsprechende Ausführungsformen der erfindungsgemäßen Mehrspindel-Werkzeugmaschine übertragen. Insbesondere ist die erfindungsgemäße Mehrspindel-Werkzeugmaschine zum Durchführen eines erfindungsgemäßen Verfahrens ausgebildet oder programmiert. Insbesondere führt die erfindungsgemäße Mehrspindel-Werkzeugmaschine das erfindungsgemäße Verfahren durch.

Gemäß einem weiteren Aspekt der Erfindung wird ein Computerprogramm mit Befehlen angegeben. Bei Ausführung der Befehle durch die Steuereinrichtung einer Mehrspindel-Werkzeugmaschine gemäß der Erfindung veranlassen die Befehle die Mehrspindel-Werkzeugmaschine dazu, ein erfindungsgemäßes Verfahren zur Steuerung einer Mehrspindel-Werkzeugmaschine durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, welches ein erfindungsgemäßes Computerprogramm speichert.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:

| | |
|---|---|
| FIG 1 | eine beispielhafte Ausführungsform eines erfindungsgemäßen Mehrspindel-Werkzeugmaschinensystems, |
| FIG 2 und FIG 3 | die gleichzeitige Bearbeitung zweier Werkstücke in den beiden Maschineneinheiten einer Doppelspindel-Maschine, |
| FIG 4 | wesentliche Verfahrensschritte bei der Durchführung eines erfindungsgemäßen Verfahrens. |

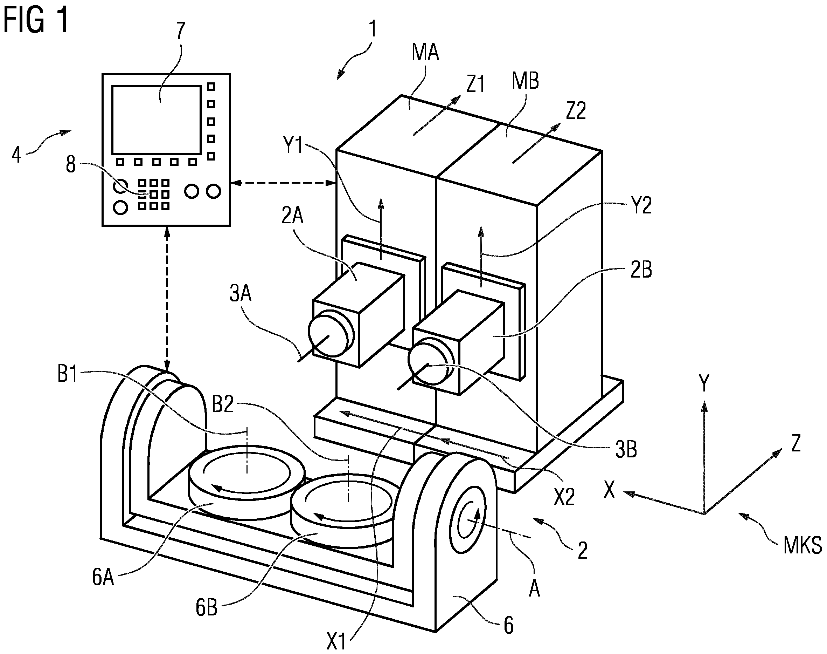

In FIG 1 ist schematisch eine beispielhafte Ausführungsform eines erfindungsgemäßen Mehrspindel-Werkzeugmaschinensystems 1 gezeigt. Dieses umfasst eine Mehrspindel-Werkzeugmaschine 2, die im Beispiel der FIG 1 insbesondere als Doppelspindel-Werkzeugmaschine 2 mit den beiden Maschineneinheiten MA und MB ausgeführt ist. Die Ausführungen lassen sich jedoch analog auch auf Werkzeugmaschinen mit mehr als zwei Werkzeugspindeln bzw. Maschineneinheiten übertragen.

Die erste Maschineneinheit MA der Mehrspindel-Werkzeugmaschine 2 weist eine erste Werkzeugspindel 2A auf, die mit einem ersten Werkzeug 3A bestückt ist. Die zweite Maschineneinheit MA der Mehrspindel-Werkzeugmaschine 2 weist eine zweite Werkzeugspindel 2B auf, die mit einem zweiten Werkzeug 3B bestückt ist. Die zweite Werkzeugspindel 2B ist dabei unabhängig von der ersten Werkzeugspindel 2A steuerbar. In einem nicht beschränkenden Beispiel sind die erste Werkzeugspindel 2A und die zweite Werkzeugspindel 2B jeweils entlang paralleler X-Achsen X1, X2, paralleler Y-Achsen Y1, Y2 und paralleler Z-Achsen Z1, Z2 als jeweilige erste Maschinenachsen X1, Y1, Z1 beziehungsweise zweite Maschinenachsen X2, Y2, Z2 bewegbar. Die X-Achsen stehen dabei senkrecht auf den Y-Achsen und die Z-Achsen stehen senkrecht auf den X-Achsen und den Y-Achsen. Es sind jedoch auch andere translatorische Maschinenachsen möglich.

Weiterhin umfasst die Mehrspindel-Werkzeugmaschine 2 gemäß dem Ausführungsbeispiel einen Werkstücktisch 6, der um eine A-Achse schwenkbar ist. Darüber hinaus umfasst der Werkstücktisch 6 die beiden Drehteller 6A und 6B, an denen jeweils ein Werkstück (in FIG 1 nicht dargestellt) um eine Achse B1 bzw. B2 drehbar befestigbar ist. Der erste Drehteller 6A ist der ersten Maschineneinheit MA und der zweite Drehteller 6B ist der zweiten Maschineneinheit MB zugeordnet. Die A-Achse wirkt auf beide Drehteller 6A und 6B gleichermaßen und ist beiden Maschineneinheiten MA und MB zugordnet.

Die Mehrspindel-Werkzeugmaschine 2 ist mit einer Steuereinrichtung 4, insbesondere einer CNC-Steuerung 4, verbunden zur (CNC-) Steuerung der Linearachsen X1, Y1 und Z1 und damit der ersten Werkzeugspindel 2A, der Linearachsen X2, Y2 und Z2 und damit der zweiten Werkzeugspindel 2B, sowie der Rundachsen A, B1 und B2. Die Programmierung der Maschinenachsen erfolgt insbesondere bezüglich eines ortsfest an einer Maschinenbasis verankerten Maschinenkoordinatensystems MKS.

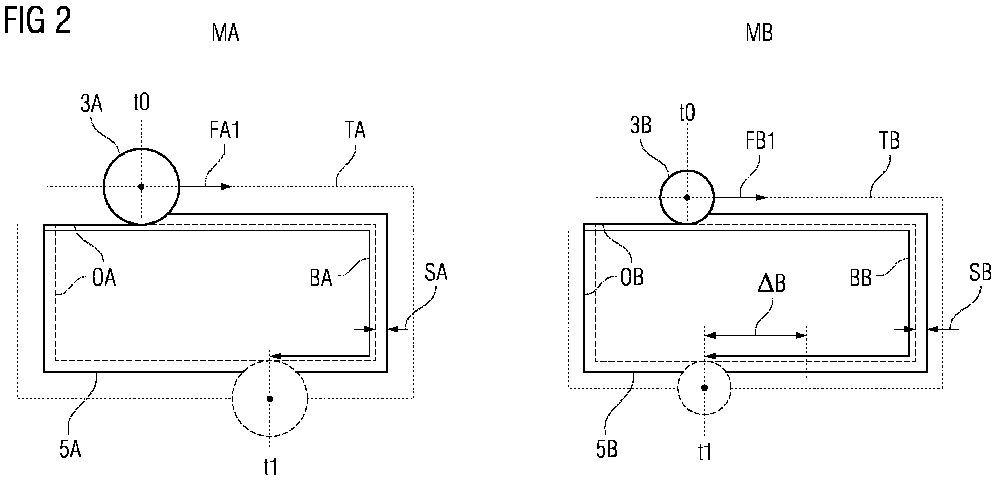

Mittels des erfindungsgemäßen Mehrspindel-Werkzeugmaschinensystems 1 kann insbesondere ein erfindungsgemäßes Verfahren zur CNC-Steuerung einer Mehrspindel-Werkzeugmaschine 2 durchgeführt werden. Zum Bearbeiten eines ersten Werkstücks 5A (siehe FIG 2) mittels des ersten Werkzeugs 3A arbeitet die CNC-Steuerung 4 ein vorgegebenes Teileprogramm in einem ersten Bearbeitungskanal (Kanal KA, nicht dargestellt) ab und zum Bearbeiten eines zweiten Werkstücks 5B mittels des zweiten Werkzeugs 3B arbeitet die Steuereinrichtung 4 dasselbe Teileprogramm in einem zweiten Bearbeitungskanal (Kanal KB, nicht dargestellt) synchronisiert mit der Abarbeitung im ersten Bearbeitungskanal ab.

Dabei steuert die CNC-Steuerung 4 zur Abarbeitung des Teileprogramms in dem ersten Bearbeitungskanal KA die ersten Maschinenachsen X1, Y1, Z1 und B1 zur Führung des ersten Werkzeugs 3A relativ zu einem ersten Werkstück (in FIG 1 nicht dargestellt) gemäß einer ersten Werkzeugbahn an und steuert zur Abarbeitung des Teileprogramms in dem zweiten Bearbeitungskanal KB die zweiten Maschinenachsen X2, Y2, Z2 und B2 zur Führung des zweiten Werkzeugs 3B relativ einem zweiten Werkstück (in FIG 1 nicht dargestellt) gemäß einer zweiten Werkzeugbahn an, wobei ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist.

Während der Abarbeitung des Teileprogramms erfasst die CNC-Steuerung 4 kontinuierlich die Bogenlänge der bearbeiteten Werkstückoberfläche für das erste und das zweite Werkstück in dem jeweiligen Kanal.

Die CNC-Steuerung 4 steuert die ersten Maschinenachsen X1, Y1, Z1 und B1 und die zweiten Maschinenachsen X2, Y2, Z2 und B2 derart an, dass eine Differenz der in dem ersten Bearbeitungskanal erfassten Bogenlänge und der in dem zweiten Bearbeitungskanal erfassten Bogenlänge reduziert wird.

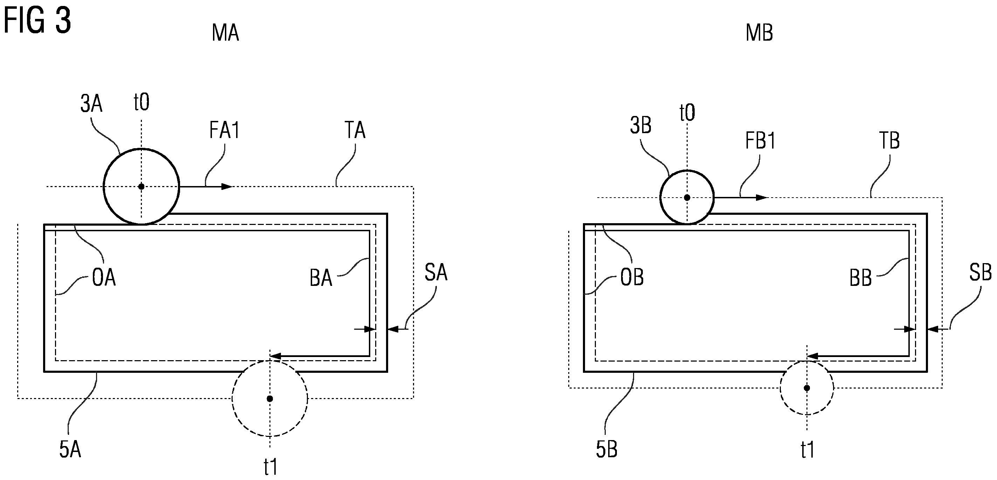

Das Verfahren wird für beispielhafte Ausführungsformen unter Bezugnahme auf die Figuren FIG 2 und FIG 3 näher erläutert.

Die Figuren FIG 2 und FIG 3 zeigen die gleichzeitige Bearbeitung zweier Werkstücke 5A und 5B in den beiden Maschineneinheiten MA und MB der Doppelspindel-Maschine. Jede Maschineneinheit MA bzw. MB wird durch einen Kanal KA bzw. KB (nicht dargestellt) der CNC-Steuerung gesteuert. In beiden Kanälen KA bzw. KB wird das gleiche Teileprogramm ausgeführt. Das Teileprogramm umfasst eine Vielzahl an Programmanweisungen (Sätzen), die eine zu fertigende (gewünschte) Kontur der Werkstückoberfläche festlegen. In FIG 2 sind dies neben der aktuellen Werkstückoberfläche zum Zeitpunkt t0 die durch die strichlierten Linien dargestellten und als OA bzw. OB bezeichneten Oberflächen. Wie aus der Figur ersichtlich ist, stimmen die bearbeiteten Werkstückoberflächen OA und OB für die Werkstücke 5A und 5B überein. Wie aus der Figur weiterhin ersichtlich ist, soll die Bearbeitung in den beiden Kanälen KA und KB der Doppelspindel-Maschine mit den beiden Maschineneinheiten MA und MB mit unterschiedlichen Werkzeugen 3A und 3B erfolgen. Dabei hat das Werkzeug 3A einen deutlich größeren Werkzeugradius (nicht bezeichnet) als das Werkzeug 3B. In der CNC-Steuerung (vgl. FIG 1) sind die aktuellen Ist-Werte der Werkzeuge 3A und 3B hinterlegt. Die CNC-Steuerung bestimmt mittels einer bei CNC-Steuerungen üblicherweise vorhandenen Werkzeugradiuskorrektur nun die Werkzeugbahnen TA und TB, damit - bei gleichem Teileprogramm in den Kanälen - trotz unterschiedlicher Werkzeugradien am Ende der Bearbeitung gleiche Werkstückkonturen OA und OB resultieren. Insbesondere stimmen die in den beiden Kanälen vorgegebenen Schnitttiefen SA und SB der Werkzeuge 3A und 3B überein.

In der Regel werden die Werkzeuge 3A und 3B mit einer fest vorgegebenen Vorschubgeschwindigkeit (bezogen auf den TCP) gemäß der programmierten Kontur bewegt. Dabei muss bei einem nicht geradlinigen Bahnverlauf das Werkzeug 3A mit dem größeren Durchmesser einen längeren Weg zurücklegen im Vergleich zu dem Werkzeug 3B mit dem geringeren Durchmesser. Bei gleichen voreingestellten Vorschubgeschwindigkeiten (feed) FA1 und FB1 der Werkzeuge 3A und 3B hat dies zur Folge, dass das Werkzeug 3B mit dem kleineren Werkzeugradius dem Werkzeug 3A mit dem größeren Werkzeugradius bei der Bearbeitung vorauseilt und die Bewegungen daher nicht synchron erfolgen. In der Zeichnung wird dies dadurch verdeutlicht, dass das Werkzeug 3B der Maschineneinheit MB zum Zeitpunkt t1 einen weiteren Weg zurückgelegt hat als das Werkzeug 3A der Maschineneinheit MA, wobei die Figur den Unterschied zur besseren Verdeutlichung nicht maßstabsgerecht wiedergibt.

Gemäß der Erfindung wird im Ausführungsbeispiel als von dem Bearbeitungsfortschritt abhängige skalare Größe, insbesondere sich kontinuierlich während der Bearbeitung ändernde, geometrische Größe, beispielhaft die Bogenlänge betrachtet, die die beiden Werkzeuge 3A und 3B jeweils an den neu geschaffenen Werkstückoberflächen zurücklegen. Bei dem Werkstück 5A wird diese durch einen dünnen durchgezogenen Pfeil dargestellt und mit BA bezeichnet. Eigentlich müsste diese deckungsgleich mit der programmierten Kontur (gestrichelte Linie OA) verlaufen, jedoch zur besseren Unterscheidbarkeit leicht versetzt davon gezeichnet. Analog zeigt der Pfeil BB die Bogenlänge für das Werkstück 5B. Weiterhin ist in FIG 2 bei dem Werkstück 5B noch die Differenz ΔB zwischen den Bogenlängen BA und BB veranschaulicht (ebenfalls nicht maßstabsgerecht dargestellt).

Die Erfindung sieht vor, dass mittels der CNC-Steuerung 4 die Relativbewegungen zwischen dem Werkzeug 3A und dem Werkstück 5A sowie zwischen dem Werkzeug 3B und dem Werkstück 5B so gesteuert werden, dass die oben genannte Differenz gegenüber einer herkömmlichen Doppelspindler-Werkstückbearbeitung reduziert bzw. minimiert wird, insbesondere derart, dass die Differenz einen vorgegebenen oder vorgebbaren Grenzwert nicht übersteigt.

Steuerungstechnisch wird die Synchronisation der Bewegungen dadurch erreicht, dass zunächst - zumindest für einen Bahnabschnitt der programmierten Bahn - der "langsamere" (allgemein: langsamste) Kanal bestimmt wird, der dem schnelleren nacheilt. Langsamster Kanal heißt, der Kanal der CNC-Steuerung bzw. die Maschineneinheit mit dem geringsten Bearbeitungsfortschritt. Im Ausführungsbeispiel ist dies der der Maschineneinheit MA zugeordnete Kanal KA (nicht dargestellt) der CNC-Steuerung 4. Die Bestimmung des langsameren Kanals (im Beispiel Kanal KA) kann z.B. durch einen einfachen Vergleich der Werkzeug-Radien erfolgen, da in diesem das Werkzeug (im Beispiel das Werkzeug 3A) zum Erreichen des gleichen Bearbeitungsfortschritts einen längeren Weg zurücklegen muss. Im Ausführungsbeispiel legt das Werkzeug 3A zwischen den beiden (zur Veranschaulichung willkürlich gewählten) Zeitpunkten t0 und t1 die Bogenlänge BA bezogen auf die bearbeitete Werkstückoberfläche des Werkstücks 5A zurück. Analog legt das Werkzeug 3B zwischen den beiden (zur Veranschaulichung willkürlich gewählten) Zeitpunkten t0 und t1 die Bogenlänge BB bezogen auf die bearbeitete Werkstückoberfläche des Werkstücks 5B zurück. Die Bogenlängen lassen sich durch einfache geometrische Überlegungen in Kenntnis der Werkzeugradien, der Vorschubgeschwindigkeit und der programmierten Kontur rechentechnisch mittels der CNC-Steuerung ermitteln. Die Differenz zwischen den beiden Bogenlängen ergibt sich zu $\Delta B = BB - BA$.

Normalerweise ist für beide Kanäle KA und KB für das jeweilige Werkzeug dieselbe Vorschubgeschwindigkeit $FA1 = FA2$ in der CNC-Steuerung voreingestellt. Im Ausführungsbeispiel wird nun die Vorschubgeschwindigkeit des schnelleren Kanals KB derart angepasst, dass sich die o.g. Differenz verringert. Hierfür wird der Wert der o.g. Differenz kontinuierlich während der Bearbeitung der Werkstücke bestimmt und einem von der CNC-Steuerung umfassten PI-Regler zugeführt, der die Zielgeschwindigkeit der Bahninterpolation, soll heißen die Vorschubgeschwindigkeit für das Werkzeug 5B bzw. des Kanals KB kontinuierlich derart regelt, dass die Differenz minimiert, idealerweise zu Null wird.

Die Auswirkungen dieser Vorgehensweise sind in FIG 3 veranschaulicht. Wie anhand der Figur zu erkennen ist, wird für den exemplarisch dargestellten Zeitpunkt $t = t1$ bei beiden Werkstücken 5A und 5B der gleiche Bearbeitungsfortschritt erreicht. Analoges gilt für die gesamte Bearbeitung der Werkstücke 5A und 5B, so dass die Bearbeitungen und die Bewegungen der Werkzeuge zumindest weitgehend synchron erfolgen. Die synchronisierten Bewegungen haben wiederum zur Folge, dass Kollisionen zwischen den dicht nebeneinander liegenden Maschineneinheiten MA und MB wirksam verhindert werden.

Die Bezugnahme auf den langsameren bzw. den langsamsten Kanal als Referenz für den oder die anderen Kanäle hat den Vorteil, dass damit der oder die schnelleren Kanäle an den Bearbeitungsfortschritt des langsameren bzw. langsamsten Kanal angepasst werden. Insbesondere werden die Vorschubgeschwindigkeiten der schnelleren Kanäle reduziert. Dies hat den Vorteil, dass die zunächst programmierten Vorschubgeschwindigkeiten durch die erfindungsgemäßen Anpassungen nicht überschritten und damit Maschinenachsen nicht überlastet werden.

Prinzipiell ließen sich auch der "langsamere" Kanal bzw. die "langsameren" Kanäle an den schnellsten Kanal anpassen. Dann müsste jedoch in anderer Weise sichergestellt werden, dass die maximal zulässigen Geschwindigkeiten einzelner Achsen nicht überschritten werden.

Die genannten Überlegungen und Verfahrensschritte lassen sich ohne weitere auf Mehrspindler-Maschinen mit mehr als zwei Spindeln übertragen.

Weiterhin können weitere Dynamikgrößen der Bahn, also zum Beispiel Bahnbeschleunigung und/oder Bahnruck, und/oder Dynamikgrößen der Maschinenachsen, also beispielsweise Achsbeschleunigung und/oder Achsruck, in die Regelung mit einbezogen werden, um die Synchronität der beiden Bearbeitungskanäle weiter zu verbessern. Damit reagiert die Bahninterpolation schneller und die Differenz zwischen den Bogenlängen BA und BB verkleinert sich schneller.

Die beschriebene Steuerungsfunktion kann insbesondere bei nominell identischen Werkzeugen mit unterschiedlichen Verschleißzuständen ein Teileprogramm über zwei oder mehrere Bearbeitungskanäle in einfacher Weise synchronisieren. Damit lassen sich hochproduktive Werkzeugmaschinen noch weiter verbessern und optimieren. Die Einführung solch einer Steuerungsfunktion erhöht die Bearbeitungsgeschwindigkeit und die -qualität.

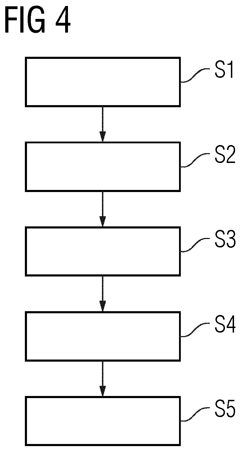

FIG 4 veranschaulicht die wesentlichen Verfahrensschritte bei der Durchführung eines erfindungsgemäßen Verfahrens.

In einem ersten Verfahrensschritt S1 werden bereitgestellt:

- eine Mehrspindel-Werkzeugmaschine, welche an einer ersten Maschineneinheit eine mit einem ersten Werkzeug bestückte erste Werkzeugspindel und an einer zweiten Maschineneinheit eine von der ersten Werkzeugspindel unabhängig steuerbare und mit einem zweiten Werkzeug bestückte zweite Werkzeugspindel aufweist,
- eine mit der Mehrspindel-Werkzeugmaschine verbundene Steuereinrichtung mit mehreren Kanälen, wobei Maschinenachsen der ersten Maschineneinheit mittels des ersten Kanals und Maschinenachsen der zweiten Maschineneinheit mittels des zweiten Kanals steuerbar sind,
- ein von der Steuereinrichtung in jedem der Kanäle abarbeitbares Teileprogramm, welches Bewegungen des ersten Werkzeugs relativ zu dem ersten Werkstück und des zweiten Werkzeugs relativ zu dem zweiten Werkstück bestimmt.

In einem Verfahrensschritt S2 wird der Werkzeugradius des ersten Werkzeugs und der Werkzeugradius des zweiten Werkzeugs bestimmt und in der Steuereinrichtung hinterlegt.

In einem Verfahrensschritt S3 wird das Teileprogramm in dem ersten Kanal und gleichzeitig in dem zweiten Kanal abgearbeitet, wobei die Abarbeitung des Teileprogramms in dem ersten Bearbeitungskanal eine Ansteuerung erster Maschinenachsen zur Führung der ersten Werkzeugspindel gemäß einer ersten Werkzeugbahn beinhaltet und die Abarbeitung des Teileprogramms in dem zweiten Bearbeitungskanal eine Ansteuerung zweiter Maschinenachsen zur Führung der zweiten Werkzeugspindel gemäß einer zweiten Werkzeugbahn beinhaltet, wobei die Werkzeugbahn für das jeweilige Werkzeug in Abhängigkeit des Werkzeugradius des Werkzeugs bestimmt wird.

In einem Verfahrensschritt S4 wird während der Abarbeitung des Teileprogramms fortlaufend in jedem Bearbeitungskanal wenigstens eine von einem Bearbeitungsfortschritt abhängige skalare Größe erfasst.

In einem Verfahrensschritt S4 wird fortlaufend eine Differenz der in Schritt 4 in den Kanälen erfassten Größe ermittelt und einem von der Steuereinrichtung umfassten Regler zugeführt.

In einem Verfahrensschritt S5 greift der Regler derart in die Steuerung der Bewegung der Maschinenachsen ein, dass die ersten Maschinenachsen und die zweiten Maschinenachsen derart angesteuert werden, dass eine Differenz der in dem ersten Bearbeitungskanal erfassten skalaren Größe und der in dem zweiten Bearbeitungskanal erfassten skalaren Größe reduziert, insbesondere minimiert wird.

Bei der skalaren Größe handelt es sich insbesondere um die Bogenlänge des von dem jeweiligen Werkzeug entlang der Werkstückoberfläche zurückgelegten Weges und der Regler ist vorzugsweise als PI-Regler ausgebildet und beeinflusst die Regelung der Vorschubgeschwindigkeit in wenigstens einem Kanal.

Die aufgezeigte Vorgehensweise bewirkt insbesondere, dass die Verfahrbewegungen der ersten Werkzeugspindel und der zweiten Werkzeugspindel zumindest weitgehend synchron erfolgen und ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist.

**Patentansprüche**

1. Verfahren zur rechnergestützten numerischen Steuerung einer Mehrspindel-Werkzeugmaschine (1), welche eine mit einem ersten Werkzeug (3A) bestückte erste Werkzeugspindel (2A) und eine von der ersten Werkzeugspindel (2A) unabhängig steuerbare und mit einem zweiten Werkzeug (3B) bestückte zweite Werkzeugspindel (2B) aufweist, wobei

   - ein erstes Werkstück (5A) mittels des ersten Werkzeugs (3A) bearbeitet wird, indem ein vorgegebenes Teileprogramm in einem ersten Bearbeitungskanal abgearbeitet wird, und ein zweites Werkstück (5B) mittels des zweiten Werkzeugs (3B) bearbeitet wird, indem das Teileprogramm in einem zweiten Bearbeitungskanal synchronisiert mit dem ersten Bearbeitungskanal abgearbeitet wird;
   - die Abarbeitung des Teileprogramms in dem ersten Bearbeitungskanal eine Ansteuerung erster Maschinenachsen (X1, Y1, Z1) zur Führung der ersten Werkzeugspindel (2A) gemäß einer ersten Werkzeugbahn (TA) beinhaltet und die Abarbeitung des Teileprogramms in dem zweiten Bearbeitungskanal eine Ansteuerung zweiter Maschinenachsen (X2, Y2, Z2) zur Führung der zweiten Werkzeugspindel (2B) gemäß einer zweiten Werkzeugbahn (TB) beinhaltet, wobei ein Bearbeitungsergebnis des ersten Werkstücks (5A) an einem Ende der ersten Werkzeugbahn (TA) gleich einem Bearbeitungsergebnis des zweiten Werkstücks (5B) an einem Ende der zweiten Werkzeugbahn (TB) ist; und
   - in jedem Bearbeitungskanal wenigstens eine von einem Bearbeitungsfortschritt abhängige skalare Größe (BA, BB) erfasst wird und die ersten Maschinenachsen (X1, Y1, Z1) und die zweiten Maschinenachsen (X2, Y2, Z2) derart angesteuert werden, dass eine Differenz ($\Delta B$) der in dem ersten Bearbeitungskanal erfassten skalaren Größe (BA) und der in dem zweiten Bearbeitungskanal erfassten skalaren Größe (BB) reduziert wird.

2. Verfahren nach Anspruch 1, wobei die skalare Größe (BA, BB) eine skalare geometrische Größe ist.

3. Verfahren nach Anspruch 1 oder 2, wobei die skalare Größe (BA, BB) eine Bogenlänge (BA, BB) ist.

4. Verfahren nach einem der Ansprüche 1 bis 3, wobei die Differenz ($\Delta B$) der in den Bearbeitungskanälen erfassten skalaren Größe (BA, BB) einem Regler, insbesondere einem PI-Regler zugeführt ist, der eine Zielgeschwindigkeit einer Bahninterpolation wenigstens eines Kanals derart regelt, dass die Differenz minimiert wird.

5. Verfahren nach Anspruch 4, wobei eine Vorschubgeschwindigkeit wenigstens eines der Werkzeuge (3A, 3B) geregelt wird.

6. Verfahren nach Anspruch 4 oder 5, wobei zusätzlich zu der Zielgeschwindigkeit auch eine Bahnbeschleunigung und/oder ein Bahnruck der Bahninterpolation wenigstens eines Kanals derart geregelt werden, dass die Differenz ($\Delta B$) minimiert wird.

7. Verfahren nach einem der Ansprüche 1 bis 6, wobei mittels einer vorausschauenden Bahninterpolation ein Geschwindigkeitsprofil für wenigstens eines der Werkzeuge (3A, 3B) über mehrere Interpolationstakte einer Steuereinrichtung (4) vorausschauend berechnet wird, derart, dass die Differenz ($\Delta B$) der in dem ersten Bearbeitungskanal erfassten skalaren Größe (BA) und der in dem zweiten Bearbeitungskanal erfassten skalaren Größe (BB) reduziert wird.

8. Steuereinrichtung (4) zur Durchführung eines Verfahrens nach einem der Ansprüche 1 bis 7, umfassend Mittel zur Steuerung einer Mehrspindel-Werkzeugmaschine (2), welche eine mit einem ersten Werkzeug (3A) bestückte erste Werkzeugspindel (2A) und eine von der ersten Werkzeugspindel (2A) unabhängig steuerbare und mit einem zweiten Werkzeug (3B) bestückte zweite Werkzeugspindel (2B) aufweist, wobei

- ein erstes Werkstück (5A) mittels des ersten Werkzeugs (3A) bearbeitbar ist, indem ein vorgegebenes Teileprogramm in einem ersten Bearbeitungskanal abarbeitbar ist, und ein zweites Werkstück (5B) mittels des zweiten Werkzeugs (3B) bearbeitbar ist, indem das Teileprogramm in einem zweiten Bearbeitungskanal synchronisiert mit dem ersten Bearbeitungskanal abarbeitbar ist;

- die Abarbeitung des Teileprogramms in dem ersten Bearbeitungskanal eine Ansteuerung erster Maschinenachsen (X1, Y1, Z1) zur Führung der ersten Werkzeugspindel (2A, 2B) gemäß einer ersten Werkzeugbahn (TA) beinhaltet und die Abarbeitung des Teileprogramms in dem zweiten Bearbeitungskanal eine Ansteuerung zweiter Maschinenachsen (X2, Y2, Z2) zur Führung der zweiten Werkzeugspindel (2A, 2B) gemäß einer zweiten Werkzeugbahn (TB) beinhaltet, wobei ein Bearbeitungsergebnis des ersten Werkstücks (5A, 5B) an einem Ende der ersten Werkzeugbahn (TA) gleich einem Bearbeitungsergebnis des zweiten Werkstücks (5A, 5B) an einem Ende der zweiten Werkzeugbahn (TB) ist; und

- in jedem Bearbeitungskanal wenigstens eine erste von einem Bearbeitungsfortschritt abhängige skalare Größe erfasst wird und die ersten Maschinenachsen (X1, Y1, Z1) und die zweiten Maschinenachsen (X2, Y2, Z2) derart angesteuert werden, dass eine Differenz ($\Delta$B) der in dem ersten Bearbeitungskanal erfassten skalaren Größe (BA) und der in dem zweiten Bearbeitungskanal erfassten skalaren Größe (BB) reduziert wird.

9. Steuereinrichtung (4) nach Anspruch 8, umfassend einen Regler, insbesondere einen PI-Regler, wobei die Differenz ($\Delta$B) der in den Bearbeitungskanälen erfassten skalaren Größe (BA, BB) dem Regler zuführbar ist und eine Zielgeschwindigkeit einer Bahninterpolation wenigstens eines Kanals derart regelbar ist, dass die Differenz ($\Delta$B) minimiert wird.

10. Steuereinrichtung (4) nach Anspruch 8 oder 9, umfassend Mittel zum Erzeugen eines Geschwindigkeitsprofils für wenigstens eines der Werkzeuge (3A, 3B) mittels einer vorausschauenden Bahninterpolation über mehrere Interpolationstakte der Steuereinrichtung (4), wobei Bahnpunkte vorausschauend derart berechenbar sind, dass die Differenz ($\Delta$B) der in dem ersten Bearbeitungskanal erfassten skalaren Größe (BA) und der in dem zweiten Bearbeitungskanal erfassten skalaren Größe (BB) reduzierbar ist.

11. Steuereinrichtung (4) nach einem der Ansprüche 8 bis 10, ausgebildet als CNC-Steuerung (4).

12. Werkzeugmaschinensystem (1), umfassend eine Mehrspindel-Werkzeugmaschine (2) sowie eine damit verbundene Steuereinrichtung (4) nach einem der Ansprüche 8 bis 11.

13. Computerprogramm aufweisend Befehle, die bei Ausführung durch eine mit einer Mehrspindel-Werkzeugmaschine (2) verbundene Steuereinrichtung (4) gemäß einem der Ansprüche 7 bis 9 die Steuereinrichtung (4) dazu veranlassen, ein Verfahren nach einem der Ansprüche 1 bis 7 durchzuführen.

14. Computerlesbares Speichermedium, welches ein Computerprogramm nach Anspruch 13 speichert.

# FIG 1

EP 4 700 508 A1

# FIG 2

MA

3A  t0  FA1  TA

OA  BA  SA

5A  t1

MB

3B  t0  FB1  TB

OB  ΔB  BB  SB

5B  t1

EP 4 700 508 A1

FIG 3

FIG 4

**Europäisches Patentamt**
**European Patent Office**
**Office européen des brevets**

# EUROPÄISCHER RECHERCHENBERICHT

Nummer der Anmeldung

EP 24 19 5653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SIEMENS AG: "SINUMERIK SINUMERIK 8400 sl Erweiterungsfunktionen", PRIOR ART PUBLISHING, PRIOR ART PUBLISHING, DIEFFENBACHSTRASSE 33 , D-10967 BERLIN, GERMANY, 5. März 2018 (2018-03-05), XP040694366, | 1,2,4-14 | INV.<br>G05B19/404<br>G05B19/416 |
| Y | * Seiten 799,801 *<br>* Seite 805 *<br>----- | 3 | |
| Y | EP 4 403 316 A1 (SIEMENS AG [DE]) 24. Juli 2024 (2024-07-24)<br>* Absätze [0001] - [0015] *<br>* Absätze [0026] - [0033] *<br>----- | 3 | |
| E | EP 4 455 809 A1 (SIEMENS AG [DE]) 30. Oktober 2024 (2024-10-30)<br>* Zusammenfassung *<br>* Absätze [0029], [0030] *<br>* Absätze [0036], [0037], [0043] *<br>* Absatz [0078] *<br>----- | 1 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 5. Februar 2025 | Dörre, Thorsten |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 5653

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2025

| Im Recherchenbericht angeführtes Patentdokument | Datum der Veröffentlichung | Mitglied(er) der Patentfamilie | Datum der Veröffentlichung |
|---|---|---|---|
| EP 4403316 A1 | 24-07-2024 | EP 4403316 A1<br>WO 2024153421 A1 | 24-07-2024<br>25-07-2024 |
| EP 4455809 A1 | 30-10-2024 | CN 118838246 A<br>EP 4455809 A1<br>US 2024353809 A1 | 25-10-2024<br>30-10-2024<br>24-10-2024 |

EPO FORM P0461

Für nähere Einzelheiten zu diesem Anhang : siehe Amtsblatt des Europäischen Patentamts, Nr.12/82